# EUROPEAN PATENT SPECIFICATION

(11) **EP 2 530 006 B1**
(45) Date of publication and mention of the grant of the patent: **08.10.2014**
(21) Application number: 10843890.4
(22) Date of filing: 25.01.2010
(51) Int. Cl.: B62K 21/00, B62K 25/16, B62K 25/24

(54) **Straddle-ridden vehicle**
Grätschsitz-Fahrzeug
Véhicule du type monté à califourchon

(43) Date of publication of application: 05.12.2012
(73) Proprietor: Honda Motor Co., Ltd., Minato-ku Tokyo 107-8556 (JP)
(72) Inventor: MORI, Yotaro, Wako-shi Saitama 351-0193 (JP)
(74) Representative: Beder, Jens
(86) International application number: PCT/JP2010/050891
(87) International publication number: WO 2011/089725

(56) References cited:
- FR-A1- 2 885 590
- JP-A- 62 198 588
- JP-A- 2003 002 024
- JP-A- 2005 231 609
- JP-A- 2006 021 734
- JP-A- 2006 021 734

## Description

### TECHNICAL FIELD

The present invention relates generally to a suspension system of a straddle-ridden vehicle, and in particular to a lightweight suspension system having the small number of components arranged to allow a steering handle of the vehicle to turn through a greater angle.

### BACKGROUND ART

A well-known suspension device of a straddle-ridden vehicle has a telescopic fork as a primary element.

A front wheel suspension system having a telescopic fork as a primary element causes a phenomenon of lowering a front part of a vehicle, for example, when a brake is applied to a front wheel of the vehicle. Such a phenomenon is referred to as nose dive phenomenon. A problem with an operation of the telescopic fork is that the fork is subjected to a bending force during its stroke. To avoid the nose dive phenomenon and the problem with the operation of the telescopic fork, the front wheel suspension system need to use a fork having a structure different from that of the telescopic fork.

A front wheel suspension system disclosed in document JP 2006-021734 includes an arm bracket attached to a front end of a swing arm, a steering frame extending forward from the arm bracket, left and right arms extending forward from lateral sides of the arm bracket, and a fork connected to distal ends of the left and right arms. The fork is also connected to a distal end of the steering frame. The fork moves in parallel to the arm bracket. Such a link structure is referred to as a parallel link.

This parallel link removes the nose dive phenomenon.

However, the suspension system of document JP 2006-021734 has the large number of components disposed forward of swing arms. More specifically, the suspension system has five components, the arm bracket, the left and right arms, the fork interconnecting the left and right arms, and the steering frame interconnecting the fork and the arm bracket. Because of the large number of the components, the suspension device is complex and heavy.

In view of this, there is demand for a technique of providing a lightweight suspension system having the reduced number of components.

The left and right arms of document JP 2006-021734 are parallel links disposed sideward of a front wheel. These parallel links have a problem that the front wheel comes into abutment on one of the left and right arms when a steering handle turns through a given angle. However, some type of vehicle requires a steering handle to be turned through a larger angle than such a given angle causing the abutment of the front wheel on one of the parallel links. In view of this, there is demand for a structure allowing a steering handle to be turned through a large turning angle.

Further, a front wheel suspension system, in which left and right connecting rods are connected to a movable support of the front wheel by left and right support pivot connections respectively, the left and right rods are connected to left and right fixations through left and right chassis pivot connections respectively and the left and right fixations are separated from each other by a separation distance greater than the separation distance between the left and right support pivot connections, is known from FR 2 885 590 A.

### SUMMARY OF INVENTION

### Technical Problem

An object of the present invention is to provide a straddle-ridden vehicle having a lightweight suspension system in which small number of components are arranged to allow a steering handle to be turned through a large turning angle.

### Solution to Problem

This object is achieved by a straddle-ridden vehicle according to the enclosed independent claim 1. Advantageous features of the present invention are defined in the corresponding subclaims.

According to the present invention, there is provided a straddle-ridden vehicle having a front wheel suspension system comprising: left and right swing arms extending forward from one of an engine of the vehicle and a vehicle body frame of the vehicle, the swing arms having rear ends vertically pivotably supported by one of the engine and the vehicle body frame; left and right link members extending obliquely forward from front ends of the left and right swing arms toward a lateral center of the vehicle, the left and right link members being supported in such a manner as to pivot leftward and rightward on the distal ends of the swing arms; and a front fork supporting a front wheel and supported by distal ends of the left and right link members in such a manner as to turn leftward and rightward.

Preferably, the left link member comprises a left swing arm linking part connected to the front end of the left swing arm, a left arm part extending forward from the left swing arm linking part, and a left steering pipe disposed on a distal end of the left arm part. The right link member has a right swing arm linking part connected to the front end of the right swing arm, a right arm part extending forward from the right swing arm linking part, and a right steering pipe disposed on a distal end of the right arm part. The front fork includes: a left pipe support shaft rotatably inserted into the left steering pipe; a left bottom bracket extending forward from and connected to a bottom end of the left pipe support shaft, the left bottom bracket supporting one end of an axle of the front wheel; a left fork pipe extending upward from the left bottom bracket; a right pipe support shaft rotatably inserted into the right steering pipe; a right bottom bracket extending forward from and connected to a bottom end of the right pipe support shaft, the right bottom bracket supporting an opposite end of the axle of the front wheel; a right fork pipe extending upward from the right bottom bracket; and an upper bracket interconnecting a top end of the right fork pipe and a top end of the left fork pipe, and interconnecting a top end of the left pipe support shaft and a top end of the right pipe support shaft.

Preferably, the left swing arm comprises a left upper arm extending forward from one of an engine of the vehicle and the vehicle body frame, and a left lower arm disposed below the left upper arm and extending forward from one of the engine and the vehicle body frame. The right swing arm comprises a right upper arm extending forward from one of the engine and the vehicle body frame, and a right lower arm disposed below the right upper arm and extending forward from one of the engine and the vehicle body frame. The left and right upper arms have front ends connected via respective spherical bearings to left and right top swing arm linking parts disposed on the respective link members, and the left and right lower arms have front ends connected via respective spherical bearings to left and right bottom swing arm linking parts disposed on the respective link members.

Preferably, the vehicle body frame comprises left and right lower frames each having an L-shape extending from a front surface of the engine along a bottom surface of the engine, and a first cross member located forward of the engine and extending between the left and right lower frames. The first cross member has one end defining a left upper arm support part extending leftward from the left lower frame in a lateral direction of the vehicle, the left upper arm support part being connected to a rear end of the left upper arm. The first cross member has an opposite end defining a right upper arm support part extending rightward from the right lower frame in the lateral direction of the vehicle, the right upper arm support part being connected to a rear end of the right upper arm. The first cross member has an engine mount part supporting the engine. The left lower frame includes a bent part having a left lower arm support part connected to a rear end of the left lower arm. The right lower frame includes a bent part having a right lower arm support part connected to a rear end of the right lower arm.

Preferably, the left and right lower frames have top parts extending to above a crank case of the engine.

Preferably, the system further comprises: a swing arm cross member located behind the left and right swing arm linking parts and extending between front parts of the left and right upper arms; and left and right cushion units disposed behind the swing arm cross member.

Preferably, the left swing arm has a V-shape with a rear end of the left lower arm connected to a rear end of the left upper arm, and the right swing arm has a V-shape with a rear end of the right lower arm connected to a rear end of the right upper arm.

Preferably, the vehicle body frame comprises a steering shaft connected to a steering handle, the steering shaft being supported in such a manner as to turn leftward and rightward, and a linking mechanism interconnecting the steering shaft and the front fork to allow the front wheel to be turned leftward and rightward.

Preferably, the linking mechanism comprises a bending mechanism or telescopic mechanism for allowing the steering shaft and the front fork to move vertically relative to each other.

### Advantageous Effects of Invention

The suspension system of the straddle-ridden vehicle according to the present invention has the small number of components because the suspension system can be formed by merely positioning the left and right link members and the fork member forward of the swing arms.

Additionally, the left and right link members are arranged in a V-shape as viewed in an axial direction of the steering stem because the left and right link members widen rearward. The front ends of the left and right swing arms, the left and right link members, and the front fork rotatably supporting the front wheel are arranged to form a trapezoidal link as viewed in the axial direction of the steering shaft. More specifically, the trapezoidal link has a top edge defined by the front fork and a bottom edge defined by a line interconnecting the front ends of the left and right swing arms. Thus, when the left and right link members turn, the front fork turns shifting in the lateral direction of the vehicle while the front wheel is turned shifting in the lateral direction of the vehicle. Since a width between the front ends of the left and right swing arms is greater than a width of the front fork, the front wheel can be turned until a rear part of the front wheel comes into contact with the swing arms. The trapezoidal link allows the steering handle to be turned through a greater angle than a parallel link having a top edge defined by the front fork and a bottom edge defined by a line interconnecting the front ends of the left and right swing arms.

Furthermore, since the left and right link members are smaller in length, the front wheel suspension system is smaller in size, and the degree of freedom in the structure of the front part of the vehicle can be improved. A weight and cost of the vehicle can be significantly reduced as well.

### BRIEF DESCRIPTION OF THE DRAWING

FIG. 1 is a left side view of a straddle-ridden vehicle having a front wheel suspension system in Embodiment 1 of the present invention.
FIG. 2 is a side view of a front part of the straddle-ridden vehicle.
FIG. 3 is a plan view of the front wheel suspension system in a first embodiment of the present invention as the system is viewed in an axial direction of a steering stem.
FIG. 4 is a perspective view of the front wheel suspension system in the first embodiment of the present invention.
FIG. 5 is a side view showing components (except for cushion units) of the front wheel suspension system in the first embodiment of the present invention.
FIG. 6 is a view showing the vehicle front part in an extended position and in a contracted position.
FIG. 7 is a view showing a process of turning a steering device rightward from a position where the vehicle travels straight.
FIG. 8 is a graph of a trajectory of a front wheel hub center in the first embodiment and a comparative example.
FIG. 9 is a graph showing a relationship between a turning angle and a trail in the first embodiment and a comparative example.
FIG. 10 is a view showing turning angles in the first embodiment and a conventional example.
FIG. 11 is a view showing turning angles in the first embodiment and a comparative example.
FIG. 12 is a side view of a front part of a straddle-ridden vehicle having a front wheel suspension system in a second embodiment of the present invention.
FIG. 13 is a side view of a front part of a straddle-ridden vehicle having a front wheel suspension system in a third embodiment of the present invention.
FIG. 14 is a side view of a front part of a straddle-ridden vehicle having a front wheel suspension system in a fourth embodiment of the present invention.
FIG. 15 is a view of a rear wheel suspension system of a straddle-ridden vehicle in a fifth embodiment.
FIG. 16 is a view of a suspension system of a straddle-ridden vehicle in a sixth embodiment; and
FIG. 17 is a cross-sectional view of a portion of the suspension system of FIG. 16.

### MODE FOR CARRYING OUT THE INVENTION

Preferred embodiments of the present invention are described below with reference to the accompanying drawings.

### First embodiment

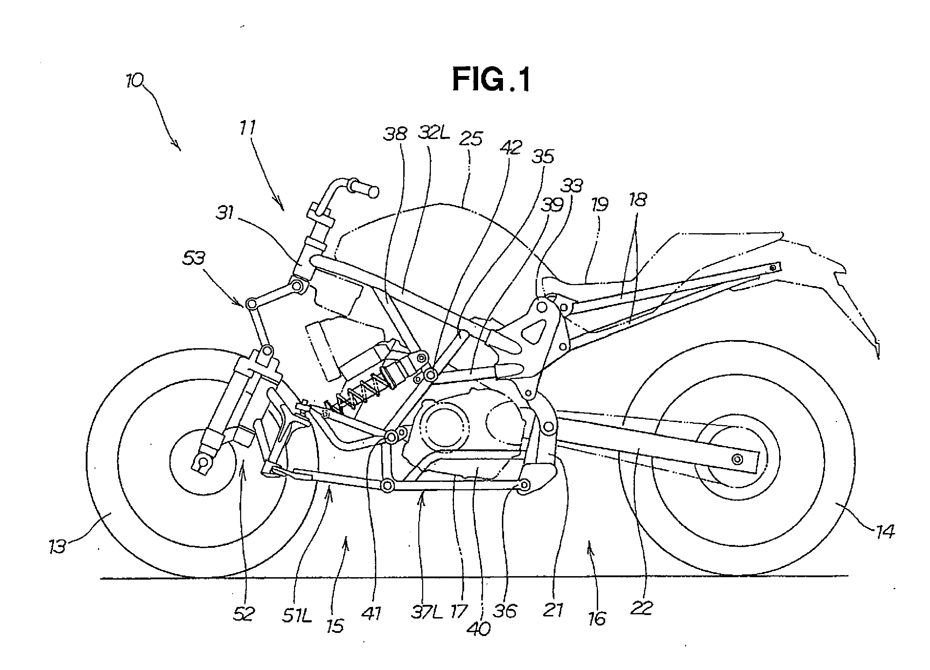

Reference is made to FIG. 1. A motorcycle 10 includes a vehicle body frame 11, a front wheel suspension system 15 provided in a front part of the vehicle body frame 11 and suspending a front wheel 13. The motorcycle 10 includes a rear wheel suspension system 16 provided in a rear part of the vehicle body frame 11 and suspending a rear wheel 14 serving as a drive wheel. The motorcycle 10 includes an engine 17 as a drive source attached to the vehicle body frame 11, and seat rails 18 extending rearward from the rear part of the vehicle body frame 11. The motorcycle 10 includes a rider seat 19 supported on the seat rails 18 and disposed between the front wheel 13 and the rear wheel 14. A vehicle such as the motorcycle 10 is called a straddle-ridden vehicle because a rider rides astride the rider seat 19. The motorcycle 10 is thus hereinafter referred to a straddle-ridden vehicle.

The detailed structure and action of the front wheel suspension system 15 are explained hereinafter.

The rear wheel suspension device 16 includes a pivot part 21 disposed in the rear part of the vehicle body frame 11, and a rear swing arm 22 extending rearward from the pivot part 21 and rotatably supporting the rear wheel 14.

In the illustrated embodiment, the engine 17 is a V engine having the cylinders arranged in a V-shape when the vehicle is viewed in side elevation. A fuel tank 25 is disposed above the V engine. The type of the engine is not limited to a V engine and may be any desired type of engine.

The vehicle body frame 11 includes a head pipe 31, a main frame 32L extending obliquely rearward and downward from the head pipe 31, and a center frame 33 disposed in a rear end part of the main frame 32L. The pivot part 21 extends downward from a bottom end of the center frame 33. The vehicle body frame 11 includes a lower frame 37L having a top end part 35 connected to the main frame 32L and a rear end part 36 connected to the pivot part 21. The lower frame 37L has an L-shape as viewed in a side elevation. The lower frame 37L extends along front and bottom surfaces of the engine 17, bypassing the engine 17. The vehicle body frame 11 includes a first sub-frame 38 extending obliquely downward from the main frame 32L and connected to the lower frame 37L, and a second sub-frame 39 extending toward the front of the vehicle from the center frame 33 and connected to the lower frame 37L. The head pipe 31, the main frame 32, the center frame 33, the lower frame 37L, the first sub-frame 38 and the second sub-frame 39 are primary components of the vehicle body frame 11.

Specifically, the lower frame 37L, which extends below the engine 17 along the front surface of the engine to above a crank case 40 of the engine 17, is fastened to the main frame 32L. The rear end part 36 of the lower frame 37L is connected to the pivot part 21, and the top end part 35 is connected to the main frame 32L. The lower frame 37L, which has its both end parts supported, has an increased rigidity.

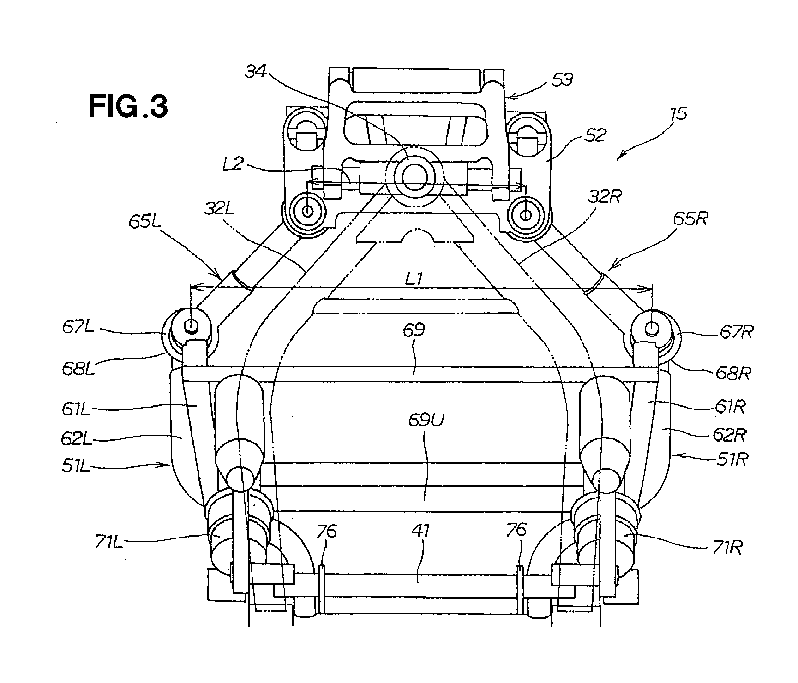

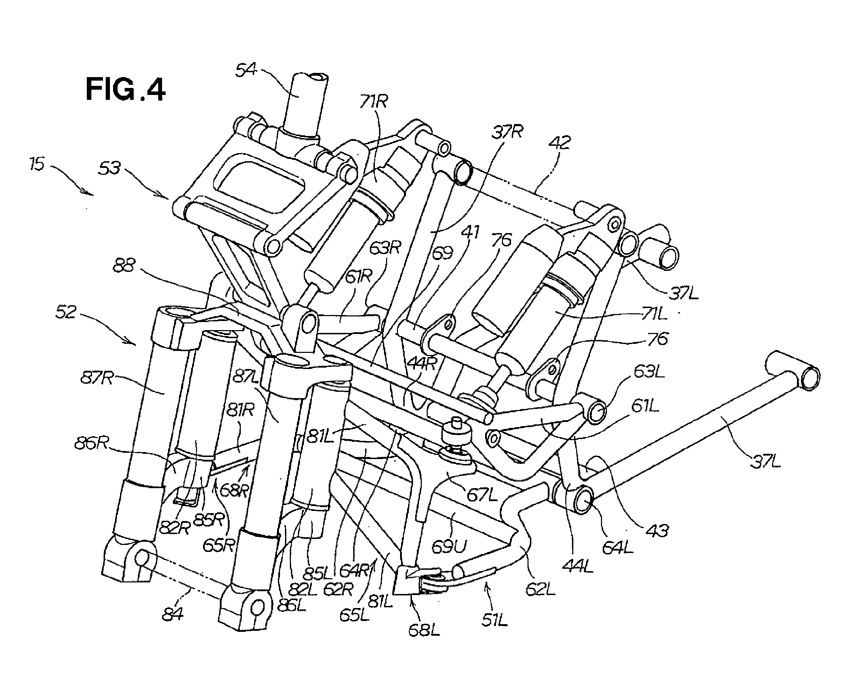

A right main frame 32R and the left main frame 32L are provided in pair, as shown in FIG. 3. A lower frame 37R and the lower frame 37L are provided in pair, as shown in FIG. 4.

First through third cross members 41 to 43 extend and interconnect the left and right lower frames 37L, 37R.

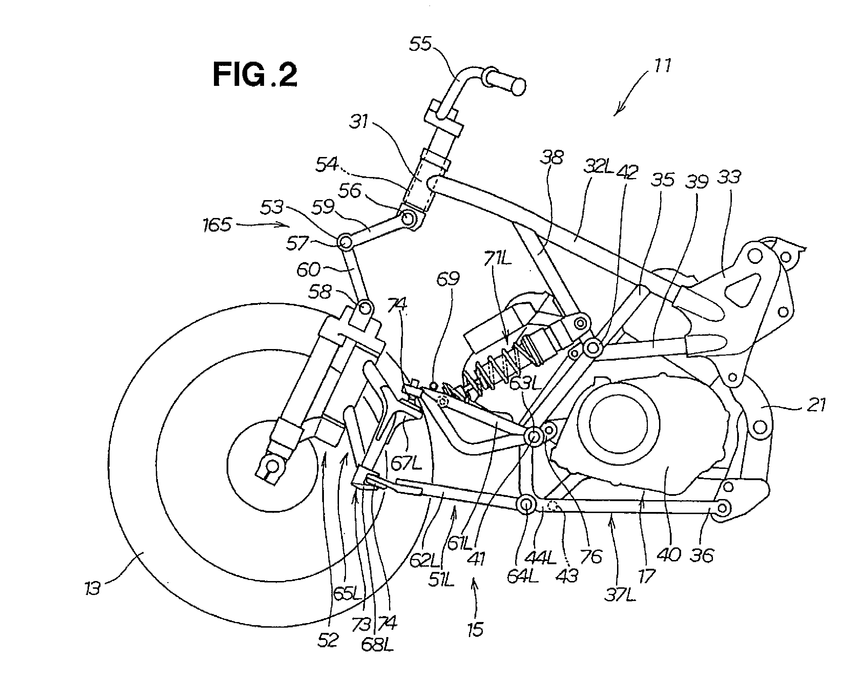

The first cross member 41 extends in a lateral direction of the straddle-ridden vehicle and is disposed forward of the engine 17, as shown in FIG. 2. The second cross member 42 extends in the lateral direction of the vehicle and is located at a joint of the first sub frame 38 and the second sub frame 39. The third cross member 43 extends in the lateral direction of the vehicle and is located behind a bent part 44L of the L-shaped lower frame.

A V-shaped linking mechanism 53 is connected to a top part of a fork member 52 serving as a front fork. A steering shaft 54 is connected to the linking mechanism 53. A steering handle 55 is connected to the steering shaft 54. The V-shaped linking mechanism 53 includes a first horizontal shaft 56 attached to the steering shaft 54, a top arm 59 swingably attached to the first horizontal shaft 56, a second horizontal shaft 57 attached to a bottom end of the top arm 59, a bottom arm 60 swingably attached to the second horizontal shaft 57, and a third horizontal shaft 58 attached to a bottom end of the bottom arm 60 and swingably attached to a top end of the fork member 52. The linking mechanism 53 allows vertical relative movement between the steering shaft 54 and the fork member 52. Specifically, the linking mechanism 53 comprises a bending mechanism 165. It is to be noted that the linking mechanism 53 may comprise a telescopic mechanism in place of the bending mechanism 165.

The steering shaft 54 is rotatably attached to the head pipe 31. By turning the steering handle 55 leftward or rightward, the driver can turn the front wheel 13 leftward or rightward. The linking mechanism 53 is bendable to allow the fork member 52 to vertically move toward the steering handle 55. That is, the vertical movement of the fork member 52 is "absorbed" by the bending action of the linking mechanism 53.

This type of fork member 52 is connected to the vehicle body frame 11 (the lower frame 37L in this example) by the front wheel suspension system 15. The detailed structure of the front wheel suspension system 15 will now be described.

As shown in Fig. 3, the front wheel suspension system 15 includes a left swing arm 51L extending toward the front of the vehicle, a left cushion unit 71L interconnecting the left swing arm 51L and the vehicle body frame 11 for controlling movement of the left swing arm 51L, and a left link member 65L extending obliquely forward from a front end of the left swing arm 51L toward a lateral center of the vehicle. The front wheel suspension system 15 includes a right swing arm 51R extending toward the front of the vehicle, a right cushion unit 71R interconnecting the right swing arm 51R and the vehicle body frame 11 for controlling vertical movement of the right swing arm 51R, and a right link member 65R extending obliquely forward from a front end of the right swing arm 51R toward the lateral center of the vehicle. The front wheel suspension system 15 includes a front fork 52 interconnecting a distal end of the right link member 65R and a distal end of the left link member 65L and supporting the front wheel.

Specifically, the left and right link members 65L, 65R are arranged in a V-shape, as viewed in top plan, with a distance L2 between a front end of the left link member 65L and a front end of the right link member 65R smaller than a distance L1 between a rear end of the left link member 65L and a rear end of the right link member 65R.

Disposed on the rear end of the left link member 65L is a left bottom swing arm linking part 68L connected to a left lower arm 62L. Disposed on the rear end of the right link member 65R is a right bottom swing arm linking part 68R connected to a right lower arm 62R.

Similarly, on the rear end of the left link member 65L, there is disposed a left top swing arm linking part 67L connected to a left upper arm 61L. On the rear end of the right link member 65R, there is disposed a right top swing arm linking part 67R connected to a right upper arm 61R.

Disposed rearward of the left and right top swing arm linking parts 67L, 67R is a swing arm cross member 69 interconnecting a front part of the left upper arm 61L and a front part of the right upper arm 61R. The cushion units 71L, 71R are disposed rearward of the swing arm cross member 69.

Although there are provided the left and right cushion units in the present embodiment, a single cushion unit may be used.

Turning to Fig. 4, the left upper arm 61L needs to be rigid enough to withstand an axial force exerted by the left cushion unit 71L on the left upper arm 61L. The same applies to the right upper arm 61R.

As discussed above, the swing arm cross member 69 interconnects the front part of the left upper arm 61L and the front part of the right upper arm 61R. The swing arm cross member 69 sufficiently increases a rigidity of the left and right upper arms 61L, 61R, particularly, a bending rigidity in the lateral direction of the vehicle, and therefore reduces the effect of the axial force of the cushion units 71L, 71R on the swing arm linking parts 67L, 67R.

A bottom swing arm cross member 69U interconnects the left lower arm 62L and the right lower arm 62R. The rigidity of the left and right lower arms 62L, 62R can be increased.

The swing arm 51L includes the upper arm 61L and the lower arm 62L disposed below the upper arm 61L, as shown in FIG. 2. The upper arm 61L has a front end connected via a spherical bearing 74 to the top swing arm linking part 67L disposed on a link member 73. Similarly, the lower arm 62L has a front end connected via a spherical bearing 74 to the bottom swing arm linking part 68L disposed on the link member 73.

The swing arm 51R has the same configuration as the swing arm 51L, and therefore, its description will be omitted.

The first cross member 41 has opposing ends protruding outward from the left lower frame 37L and the right lower frame 37R in the lateral direction of the vehicle, as shown in FIG. 4. These protruding ends define a left upper arm linking part 63L and a right upper arm linking part 63R.

Engine mounts 76, 76 supporting the engine are disposed on the first cross member 41. The substantially L-shaped left lower frame 37L has a bent part 44L provided with a left lower arm support part 64L connected to a rear end of the left lower arm 62L. The substantially L-shaped right lower frame 37R has a bent part 44R provided with a right lower arm support part 64R connected to a rear end of the right lower arm 62R.

Next, structures of the left and right link members 65L, 65R are described in detail.

The left link member 65L includes the left top swing arm linking part 67L, a left arm part 81L extending forward from the left top swing arm linking part 67L, the left bottom swing arm linking part 68L, left arm parts 81L, 81L extending forward from the left bottom swing arm linking part 68L, and a left steering pipe 82L disposed on distal ends of the left arm parts 81L, 81L.

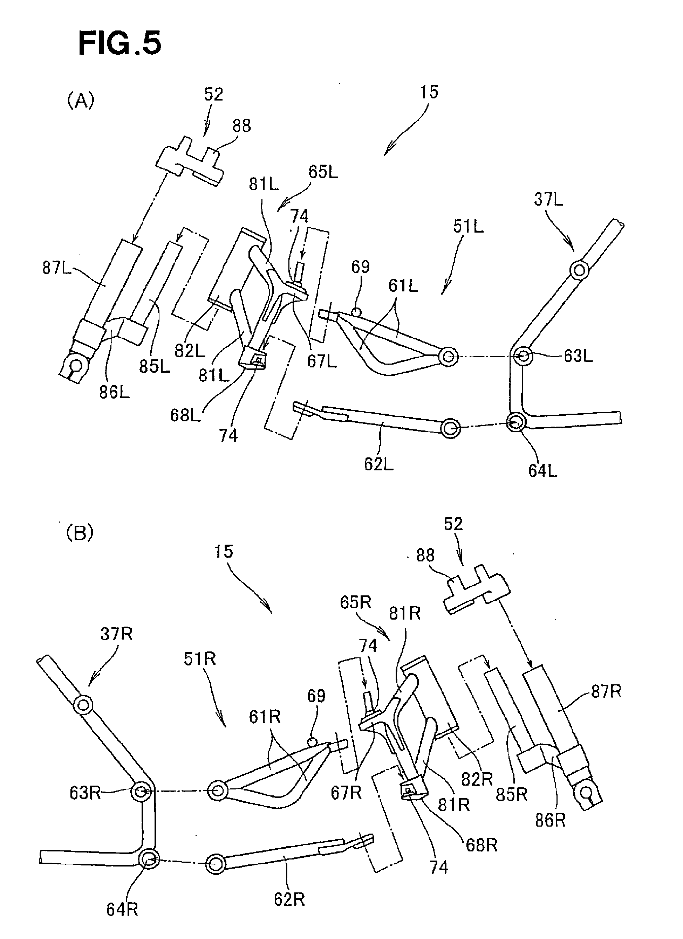

Similarly, the right link member 65R includes the right top swing arm linking part 67R, a right arm part (designated at 81R in FIG. 5, explained hereinafter) extending forward from the right top swing arm linking part 67R, the right bottom swing arm linking part 68R, right arm parts 81R, 81R extending forward from the right bottom swing arm linking part 68R, and a right steering pipe 82R disposed on distal ends of the right arm parts 81R, 81R.

Next, a structure of the front fork 52 is described in detail.

The front fork 52 includes a left pipe support shaft 85L rotatably inserted into the left steering pipe 82L, a left bottom bracket 86L connected to and extending forward from a bottom end of the left pipe support shaft 85L and supporting one end of a front wheel axle 84, and a left fork pipe 87L extending upward from the left bottom bracket 86L. The front fork 52 includes a right pipe support shaft 85R rotatably inserted into the right steering pipe 82R, a right bottom bracket 86R connected to and extending forward from a bottom end of the right pipe support shaft 85R and supporting an opposite end of the front wheel axle 84, and a right fork pipe 87R extending upward from the right bottom bracket 86R. The front fork 52 includes an upper bracket 88 interconnecting a top end of the right fork pipe 87R and a top end of the left fork pipe 87L and interconnecting a top end of the left pipe support shaft 85L and a top end of the right pipe support shaft 85R.

The left pipe support shaft 85L of the front fork 52 is inserted in the left steering pipe 82L of the left link member 65L in such a manner as to rotate relative to the left steering pipe 82L. The right pipe support shaft 85R of the front fork 52 is inserted in the right steering pipe 82R of the right link member 65R in such a manner as to rotate relative to the right steering pipe 82R.

The steering pipes 82L, 82R and the pipe support shafts 85L, 85R can be extended vertically to thereby increase the bending rigidity of the front fork 52.

The above-mentioned elements of the suspension system in Embodiment 1 will be further discussed below.

FIG. 5(A) shows the elements of the suspension system on a left side of the vehicle.

The front wheel suspension system 15 includes the left swing arm 51L extending forward from the left lower frame 37L, the left link member 65L disposed forward of the left swing arm 51L, and the fork member 52 disposed forward of the left link member 65L.

The left swing arm 51L includes the left upper arm 61L and the left lower arm 62L. The left upper arm 61L has a rear end connected to the left upper arm linking part 63L disposed on the vehicle body frame, and the rear end of the left lower arm 62L is connected to the left lower arm support part 64L disposed on the vehicle body frame.

The rear end of the left link member 65L is provided with a swing arm linking part including the top swing arm linking part 67L and the bottom swing arm linking part 68L. The front end of the left upper arm 61L is connected to the top swing arm linking part 67L via the spherical bearing 74. The left lower arm 62L has a front end connected to the bottom swing arm linking part 68L via the spherical bearing 74.

FIG. 5(B) shows the elements of the suspension system on a right side of the vehicle. These elements are the same as those shown in FIG. 5(A), and thus their descriptions will be omitted.

Discussion will be made as to a function of the suspension system of the straddle-ridden vehicle.

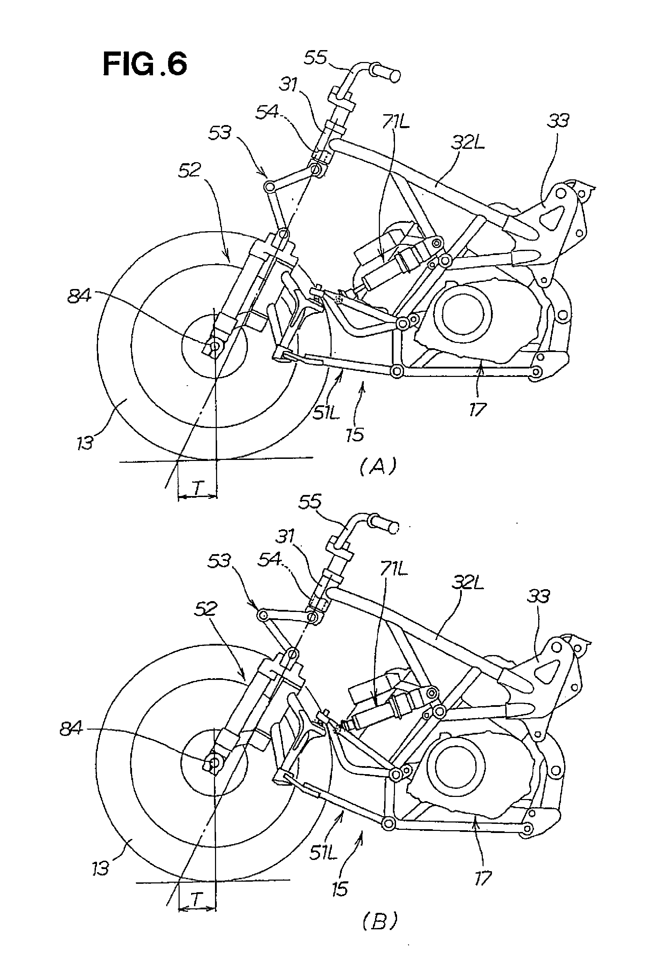

Referring to FIG. 6(A), the vehicle stops or travels normally and the swing arm 51L assumes a horizontal or slightly upward inclined position undergoing a downward load by a sum of a vehicle weight and a rider weight. When a front wheel brake is applied or when a collision force acts on the front wheel 13 from the ground surface, then, the swing arm 51L swings far upward, as shown in FIG. 6(B).

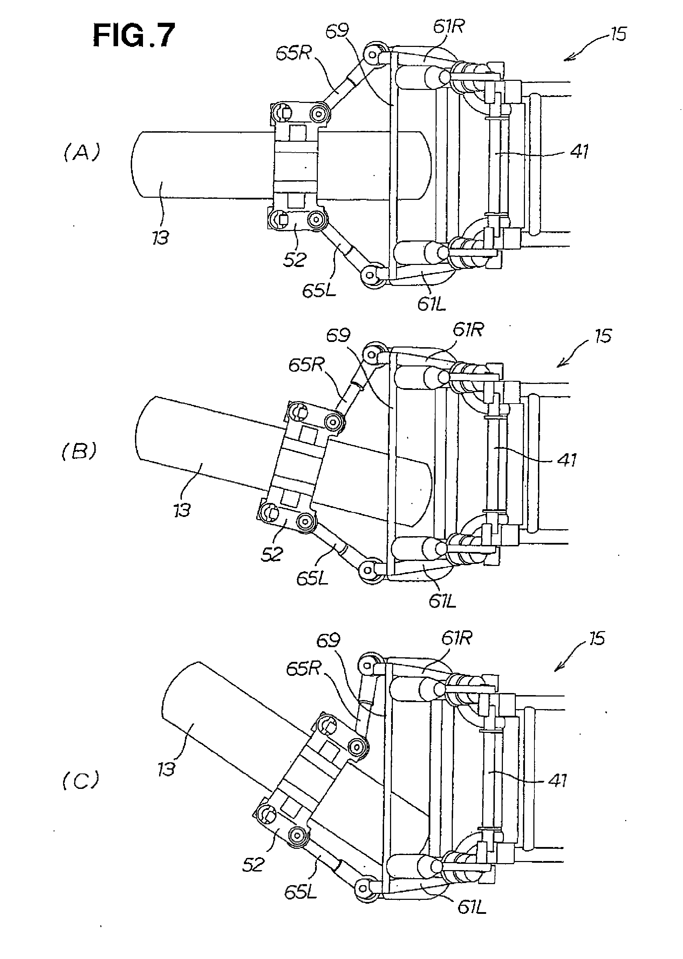

Turning to FIG. 7(A), the front wheel 13 is disposed along a longitudinal axis of the vehicle body when an operation of turning the steering handle 55 is not performed.

When the driver then turns the steering handle 55 rightward, the right link member 65R pivot counterclockwise, as viewed in plan, to turn the front wheel 13 rightward, as shown in FIG. 7(B).

When the driver further turns the steering handle 55, the right link member 65R pivots further counterclockwise, as viewed in plan, to turn the front wheel 13 further rightward, as shown in FIG. 7(C).

It is noted that the front wheel 13 is turned leftward alike.

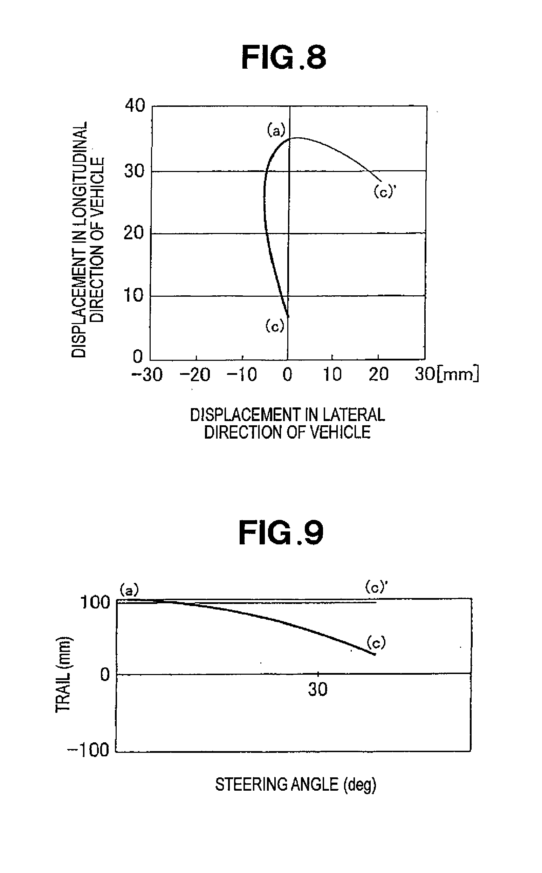

With reference to FIG. 8, discussion will be made as to the trajectory of a wheel hub center of the front wheel, as viewed in an axial direction of the steering shaft 54, during turning. The front wheel hub center is the center point of the front wheel axle in the vehicle width direction. In FIG. 8, point (a) indicates the position of the hub center in FIG. 7(A), and point (c) indicates the position of the hub center in FIG. 7(C).

Furthermore, the trajectory from point (a) to point (c)' is the trajectory of the front wheel hub center according to a comparative example, and is equivalent to the trajectory of a vehicle that employs a telescopic fork.

When the front wheel is turned to the right, in the case of a telescopic fork, the front wheel moves in a turning direction because the trail is constant. Specifically, the position of the wheel hub center moves from point (a) to point (c)' in FIG. 8.

In this case, the center of gravity of the vehicle moves outside of the straight line joining points at which the front wheel and the rear wheel are in contact with the ground. In other words, the center of gravity of the vehicle moves opposite the direction in which the vehicle tilts. Therefore, to improve turning ability of the vehicle, a driver needs to take a so-called "lean-in or hang-on" position where his body is located inside the vehicle body to shift a center of gravity of the vehicle and driver laterally inward of the vehicle.

In the front wheel suspension system according to the present invention, when the front wheel is turned to the right, the front wheel moves opposite the turning direction. Specifically, the position of the wheel hub center moves from point (a) in FIG. 8 to point (c).

In this case, a center of gravity of the vehicle moves inside of the straight line joining points where the front wheel and the rear wheel are in contact with the ground. In other words, the center of gravity of the vehicle moves in the direction in which the vehicle tilts. Therefore, the turning ability of the vehicle can be increased without having to intentionally shift a center of gravity of the vehicle and driver laterally inward of the vehicle.

Next, the relationship between the turning angle and the trail is described with reference to FIG. 9. The term "trail" indicates a length T in FIG. 6(A). This T refers to the distance between a point where an axis of the steering shaft 54 meets the ground surface and a point where a vertical line passing through the axle 84 of the front wheel 13 meets the ground surface. In FIG. 9, (a), (c), and (c)' are the same as those shown in FIG. 8.

When the front wheel of the vehicle according to the present invention is turned to the right, the trail gradually decreases from 100 mm (point a) to 0 (point c).

With the telescopic fork in the comparative example, the trail is a constant value of 100 mm (point (a), point (c)') even when the vehicle is turned to the right. In the comparative example, when the trail increases to improve the straight-traveling stability, more force is needed for turning the front wheel when the turning angle has increased. In other words, the telescopic fork improves straight-traveling stability, but it is difficult for the telescopic fork to achieve both light handling and the improvement of the straight-traveling stability.

In the present invention, when the vehicle is turned, the trail changes because of movement of a point at which the axis of the steering shaft meets the ground surface. Particularly, the trail can be set so that the trail increases to improve the straight-traveling stability when the turning angle is near 0° while the trail reduces, as the turning angle increases, to reduce a resistance to turning. Consequently, according to the present invention, it is possible to achieve both the improvement of straight-traveling stability and light handling (satisfactory maneuverability).

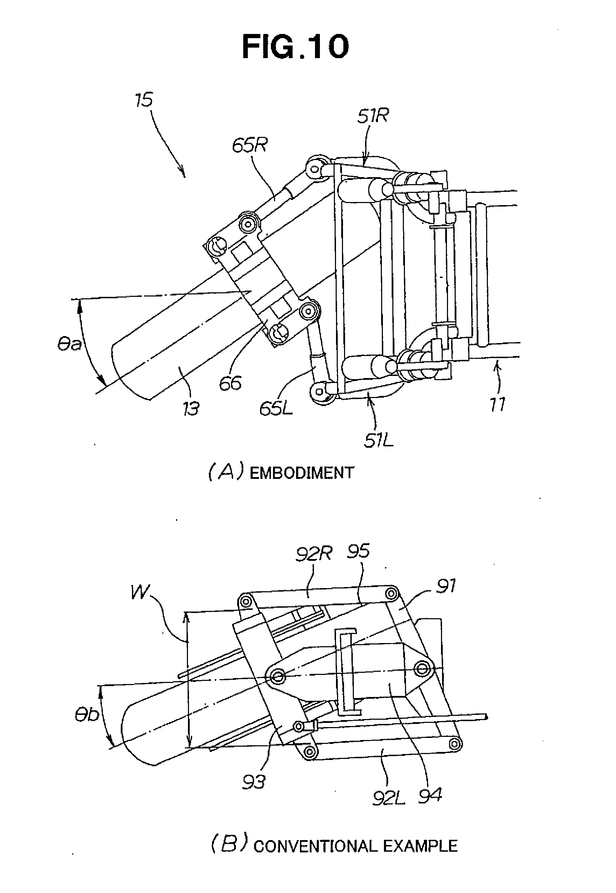

Next, the number of components of the front wheel suspension system is described with reference to FIG. 10.

The front wheel suspension system 15 in Embodiment 1 includes the left and right link members 65L, 65R and the left and right swing arms 51L, 51R, as shown in FIG. 10(A). Specifically, the number of the components is 3.

The front wheel suspension system of the conventional example includes an arm bracket 91, left and right arms 92L, 92R, a fork member 93, and a steering frame 94, as shown in FIG. 10(B). Specifically, the number of components is 5.

Consequently, the front wheel suspension system in Embodiment 1 has fewer components and a simpler structure than the conventional one.

In the conventional structure as shown in FIG. 10(B), the turning angle θb is small because a turning angle θb is limited by the gap W between the left and right arms 92L, 92R.

When the gap W is increased in order to increase the turning angle θb, the front wheel suspension system becomes larger, which is undesirable.

In the present invention as shown in FIG. 10(A), the left and right link members 65L, 65R widens rearward. Therefore, the front wheel 13 does not readily touch the left and right link members 65L, 65R, and a turning angle θa increases.

A summary of the foregoing is as follows.

In the suspension device 15 of the straddle-ridden vehicle according to the present invention, the front ends of the left and right swing arms 51L, 51R, the left and right link members 65L, 65R, and the front fork 52 rotatably supporting the front wheel are arranged to form a trapezoidal link as viewed in the axial direction of the steering shaft. More specifically, the trapezoidal link has a top edge defined by the front fork 52 and a bottom edge defined by a line interconnecting the front ends of the left and right swing arms 51L, 51R. Thus, when the left and right link members 65L, 65R turn, the front fork 52 turns shifting in the lateral direction of the vehicle while the front wheel is turned shifting in the lateral direction of the vehicle. Since a width between the front ends of the left and right swing arms 51L, 51R is greater than a width of the front fork 52, the front wheel can be turned until a rear part of the front wheel comes into contact with the swing arms 51L, 51R. The trapezoidal link allows the steering handle 55 to be turned through a greater angle than a parallel link having a top edge defined by the front fork and a bottom edge defined by a line interconnecting the front ends of the left and right swing arms.

Furthermore, since the left and right link members 65L, 65R are smaller in length, the front wheel suspension system 15 is smaller in size, and the degree of freedom in the structure of the front part of the vehicle can be improved. A weight and cost of the vehicle can be significantly reduced as well.

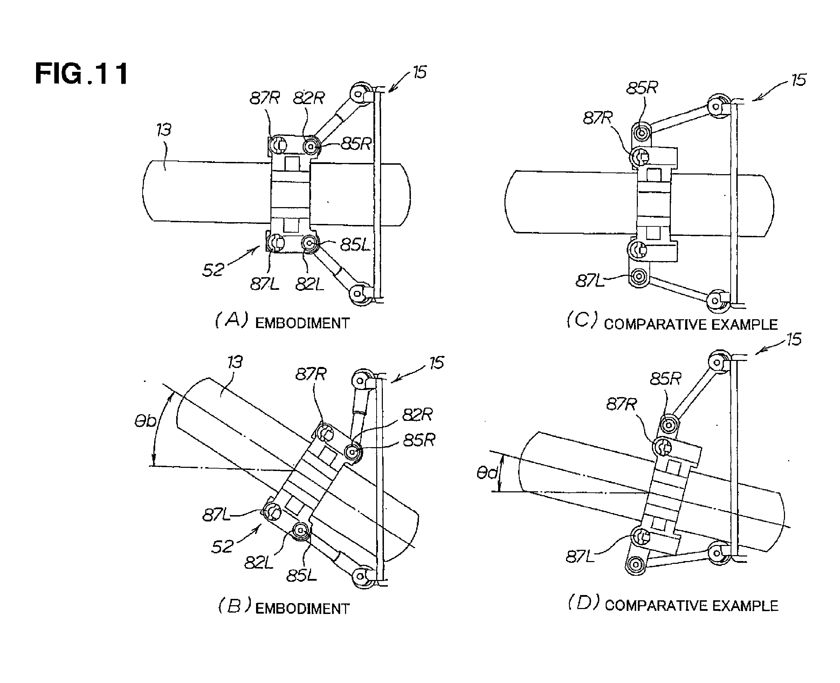

The fork member 52 (the front fork 52) is configured to allow the fork member 52 to turn through an increased turning angle, which is discussed in relation to FIG. 11.

In the embodiment shown in FIG. 11(A), the pipe support shafts 85L, 85R into which the steering pipes 82L, 82R are inserted are disposed behind the fork pipes 87L, 87R of the front fork 52.

In the comparative example shown in FIG. 11(C), the pipe support shafts 85L, 85R are disposed sideward of the fork pipes 87L, 87R. A gap between the left and right fork pipes 87L, 87R is larger than when the pipe support shafts 85L, 85R are disposed behind the fork pipes 87L, 87R. A turning angle θd is then smaller, as shown in FIG. 11(D).

In the embodiment shown in FIG. 11(B), since the pipe support shafts 85L, 85R are disposed behind the fork pipes 87L, 87R, a gap between the left and right fork pipes 87L, 87R is small. As a result, a turning angle θb is greater than when the pipe support shafts 85L, 85R are disposed sideward of the fork pipes 87L, 87R.

### Second Embodiment

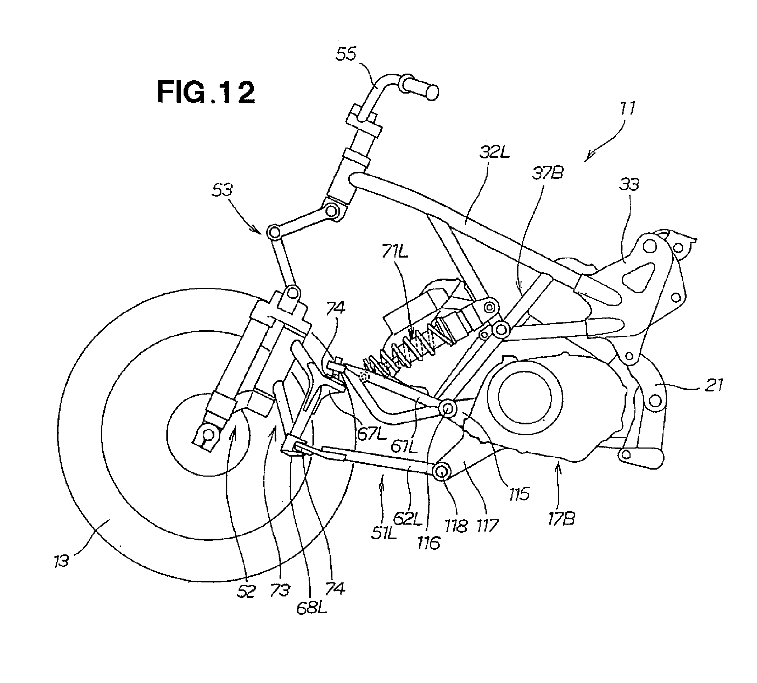

A front wheel suspension system in the second embodiment is described with reference to FIG. 12. The suspension system in the second embodiment differs from the suspension system in the first embodiment in that the swing arm 51L extends forward from an engine 17B. The engine 17B is a rigid body provided to the vehicle body frame 11.

Specifically, a first linking part 115 and a second linking part 117 extend forward from the engine 17B. The rear end of the upper arm 61L is connected to an upper arm linking part 116 at a distal end of the first linking part 115, and the rear end of the lower arm 62L is connected to a lower arm linking part 118 at a distal end of the second linking part 117.

A lower frame 37B is connected to the first linking part 115 without extending below the engine 17B.

### Third Embodiment

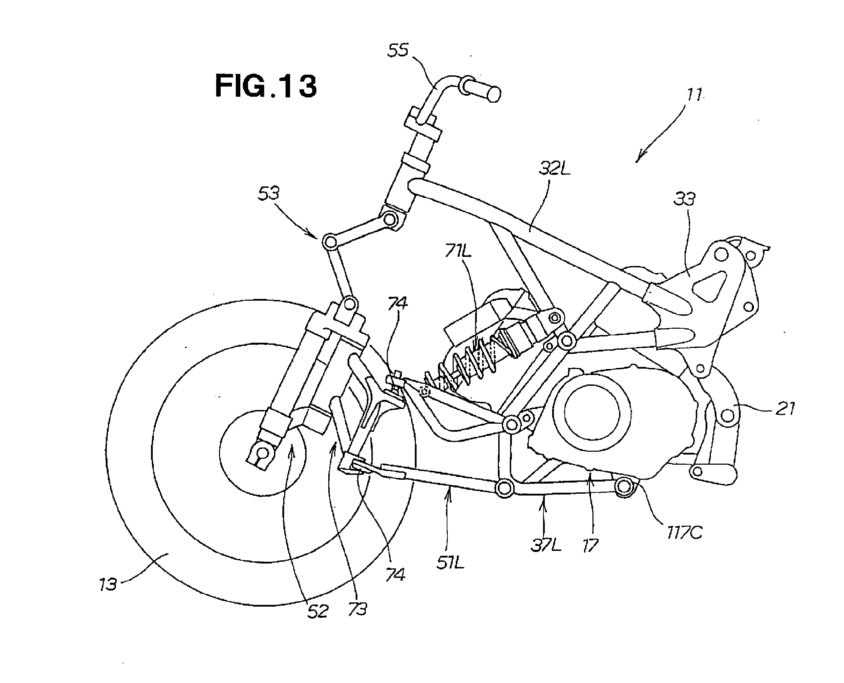

A front wheel suspension system in the third embodiment of the present invention is described with reference to FIG. 13.

The suspension system in the third embodiment differs from the suspension system in the first embodiment in that the rear end of the lower frame 37L is connected not to the pivot part 21 but to a linking part 117C provided to the bottom surface of the engine 17.

### Fourth Embodiment

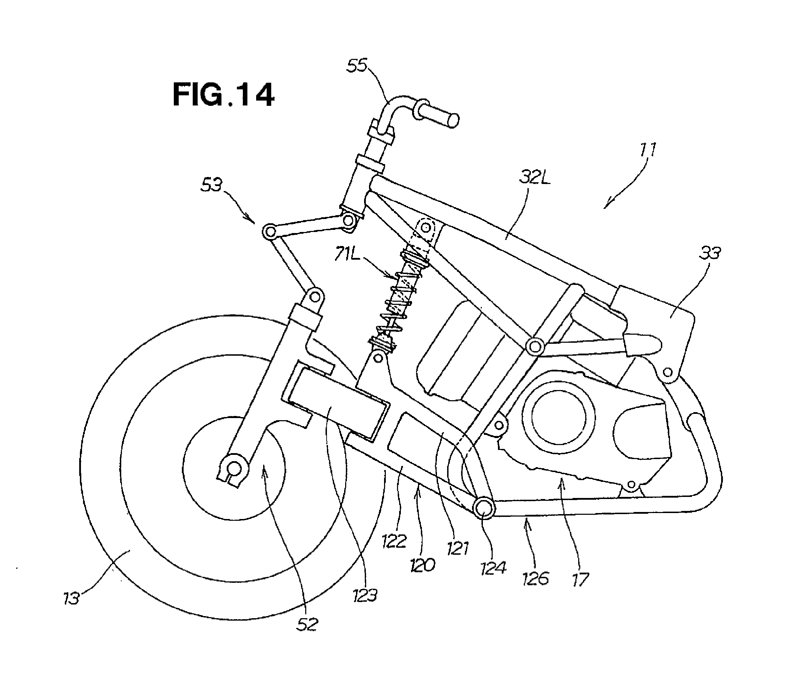

A front wheel suspension system in the fourth embodiment of the present invention is described with reference to FIG. 14.

The suspension system in the fourth embodiment differs from the suspension system in the first embodiment in that a rear part of a lower arm 122 and a rear part of an upper arm 121 are connected together. A rear end of a swing arm 120 having a V-shape as viewed in side elevation is connected to an arm linking part 124 of a lower frame 126 of the vehicle body frame 11.

Since the swing arm 120 and the lower frame 126 are connected together at a single point defined by the arm linking part 124, the number of components of the suspension system is smaller.

The swing arm 120 and a link member 123 are connected to each other via a needle bearing.

### Fifth Embodiment

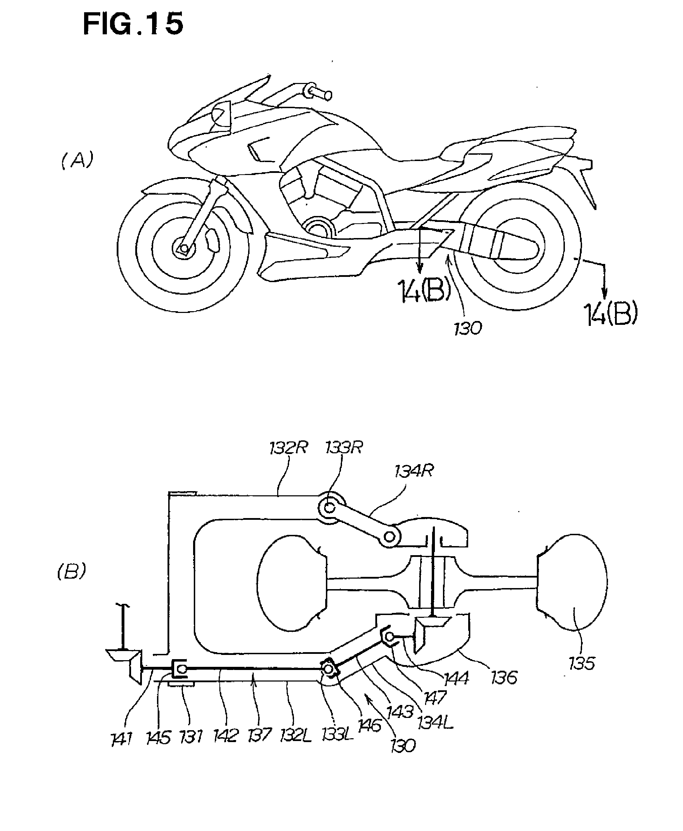

A suspension system in the fifth embodiment is described with reference to FIG. 15. As shown in FIG. 15(A), a structure of the suspension system can be applied to a turning mechanism of a rear wheel.

Specifically, as shown in FIG. 15(B) that is a cross-sectional view of a portion of a straddle-ridden vehicle shown in FIG. 15(A), a rear wheel suspension system 130 of the straddle-ridden vehicle includes left and right rear swing arms 132L, 132R extending rearward from a pivot part 131, left and right link members 134L, 134R connected via link pins 133L, 133R to front ends of the rear swing arms 132L, 132R. The left and right link members 134L, 134R extend obliquely rearward from the front ends of the rear swing arms 132L, 132R toward a lateral center of the vehicle. The suspension system 130 includes a rear wheel support part 136 attached to rear ends of the left and right link members 134L, 134R and rotatably supporting a rear wheel 135.

A structure of a drive system 137 for driving the rear wheel 135 is discussed below.

The drive system 137 includes a plurality of drive shafts 141 to 144 for transmitting a motive power of the engine, constant-velocity joints 145 to 147 disposed between adjacent ones of the drive shafts 141 to 144, and a pair of final gears 148, 149 for transmitting the transmitted motive power to a rear wheel axle.

Specifically, a shaft drive design is employed in the drive system 137.

Due to the presence of the constant-velocity joints 145 to 147, angles between the drive shafts 141 to 144 can be varied. As a result, the rear wheel 135 can serve as a steerable wheel.

### Sixth Embodiment

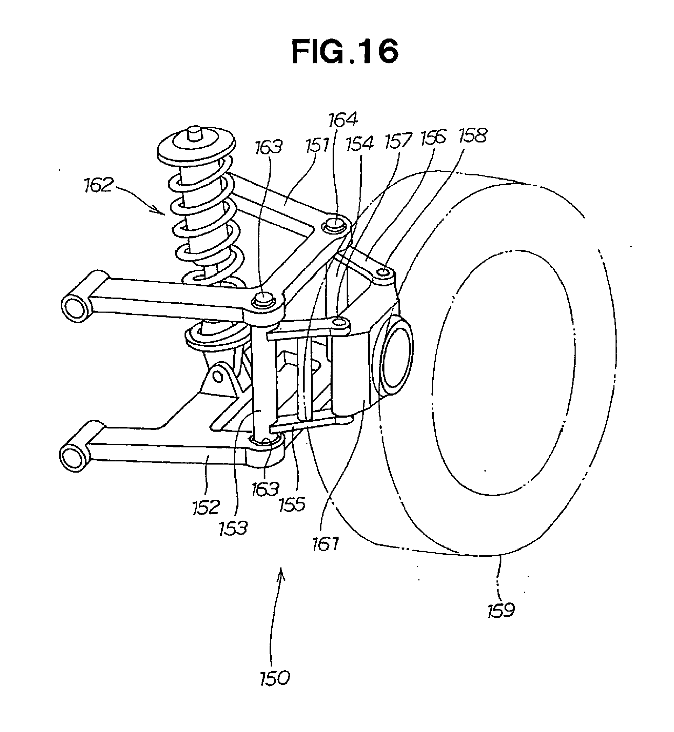

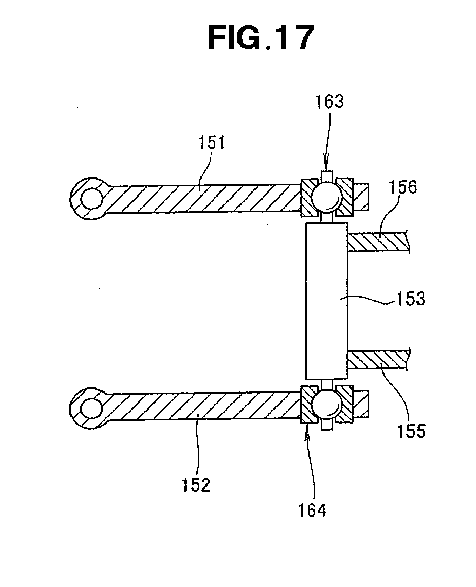

A front wheel suspension system in the sixth embodiment is described with reference to FIG. 16 and FIG. 17.

The front wheel suspension system can be applied to the suspension of a four-wheel vehicle, as shown in FIG. 16 and FIG. 17.

A vehicle wheel suspension system 150 includes top and bottom swing arms 151, 152 extending laterally outward from the vehicle body and having a U shape as viewed in plan. The suspension system 150 includes a front pair of top and bottom spherical joints 163, 163 disposed on front portions of distal ends of the top and bottom swing arms 151, 152, a rear pair of top and bottom spherical joints 164, 164 disposed on rear portions of the distal ends of the top and bottom swing arms 151, 152, a shaft 153 joining the top and bottom spherical joints 163 together, and a shaft 154 joining the top and bottom spherical joints 164 together. The suspension system 150 includes front and rear link members 155, 156 extending obliquely and laterally outward from these joining shafts 153, 154. The suspension system 150 includes a third shaft 157 vertically extending through distal ends of the front link member 155, and a fourth shaft 158 vertically extending through distal ends of the rear link member 156. The suspension system 150 includes a vehicle wheel support part 161 supported by the third shaft 157 and fourth shaft 158. The vehicle wheel support part 161 supports a vehicle wheel 159. The suspension system 150 includes a cushion unit 162 for controlling vertical movement of the bottom swing arm 152.

Usually, top and bottom swing arms have a substantially triangular shape as viewed in plan, and have their distal ends attached to a vehicle wheel support part.

The top and bottom swing arms 151, 152 are members having a U shape as viewed in plan, which increases rigidity in the longitudinal direction of the vehicle.

The present invention is applied not only to the motorcycle as discussed in the embodiments above, but also to any common straddle-ridden vehicle such as a straddle-ridden three-wheeled vehicle (a three-wheeled buggy).

### INDUSTRIAL APPLICABILITY

The present invention is suitable for use in a motorcycle.

### Reference Signs List

- 10: Straddle-ridden vehicle (motorcycle)
- 11: Vehicle body frame
- 13: Front wheel
- 14: Rear wheel
- 15: Front wheel suspension system
- 17: Engine
- 17B: Engine
- 37L: Left lower frame
- 37R: Right lower frame
- 40: Crank case of engine
- 41: First cross member
- 44L: Bent part of left lower frame
- 51L: Left swing arm
- 51R: Right swing arm
- 52: Front fork (fork member)
- 53: Linking member
- 54: Steering shaft
- 55: Steering handle
- 61L: Left upper arm
- 61R: Right upper arm
- 62L: Left lower arm
- 62R: Right lower arm
- 63L: Left upper arm support part
- 63R: Right upper arm support part
- 64L: Left lower arm support part
- 64R: Right lower arm support part
- 65L: Left link member
- 65R: Right link member
- 67L: Left top swing arm linking part
- 67R: Right top swing arm linking part
- 68L: Left bottom swing arm linking part
- 68R: Right bottom swing arm linking part
- 69: Swing arm cross member
- 74: Spherical bearing
- 76: Engine mount part
- 81L: Left arm part
- 81R: Right arm part
- 82L: Left steering pipe
- 82R: Right steering pipe
- 84: Front wheel axle
- 85L: Left pipe support shaft
- 85R: Right pipe support shaft
- 86L: Left bottom bracket
- 86R: Right bottom bracket
- 87L: Left fork pipe
- 87R: Right fork pipe
- 88: Upper bracket
- 165: Bending mechanism

## Claims

1. A straddle-ridden vehicle (10) having a front wheel suspension system (15) comprising:
left and right swing arms (51L, 51R) extending forward from one of an engine (17) of the vehicle (10) and a vehicle body frame (11) of the vehicle (10), the swing arms (51L, 51R) having rear ends vertically pivotably supported by one of the engine (17) and the vehicle body frame (11);
left and right link members (65L, 65R); and
a front fork (52) supporting a front wheel (13) and supported by distal ends of the left and right link members (65L, 65R) in such a manner as to turn leftward and rightward,
**characterized in that**
said left and right link members (65L, 65R) extend obliquely forward from front ends of the left and right swing arms (51 L, 51 R) toward a lateral center of the vehicle (10) and the left and right link members (65L, 65R) are supported in such a manner as to pivot leftward and rightward on the distal ends of the swing arms (51 L, 51R).

2. The straddle-ridden vehicle of claim 1, wherein
the left link member (65L) comprises a left swing arm linking part (67L) connected to the front end of the left swing arm (5 1 L), a left arm part (8 1 L) extending forward from the left swing arm linking part (67L), and a left steering pipe (82L) disposed on a distal end of the left arm part (8 1 L); wherein
the right link member (65R) has a right swing arm linking part (67R) connected to the front end of the right swing arm (51 R), a right arm part (81 R) extending forward from the right swing arm linking part (67R), and a right steering pipe (82R) disposed on a distal end of the right arm part (81R); and wherein the front fork (52) includes:
a left pipe support shaft (85L) rotatably inserted into the left steering pipe (82L);
a left bottom bracket (86L) extending forward from and connected to a bottom end of the left pipe support shaft (85L), the left bottom bracket (86L) supporting one end of an axle (84) of the front wheel (13);
a left fork pipe (87L) extending upward from the left bottom bracket (86L);
a right pipe support shaft (85R) rotatably inserted into the right steering pipe (82R);
a right bottom bracket (86R) extending forward from and connected to a bottom end of the right pipe support shaft (85R), the right bottom bracket (86R) supporting an opposite end of the axle (84) of the front wheel (13);
a right fork pipe (87R) extending upward from the right bottom bracket (86R); and
an upper bracket (88) interconnecting a top end of the right fork pipe (87R) and a top end of the left fork pipe (87L), and interconnecting a top end of the left pipe support shaft (85L) and a top end of the right pipe support shaft (85R).

3. The straddle-ridden vehicle of claim 2, wherein
the left swing arm (51 L) comprises a left upper arm (61 L) extending forward from one of the engine (17) and the vehicle body frame (11), and a left lower arm (62L) disposed below the left upper arm (6 1 L) and extending forward from one of the engine (17) and the vehicle body frame (11); wherein
the right swing arm (51R) comprises a right upper arm (61 R) extending forward from one of the engine (17) and the vehicle body frame (11), and a right lower arm (62R) disposed below the right upper arm (6 1 R) and extending forward from one of the engine (17) and the vehicle body frame (11); and wherein
the left and right upper arms (61L, 61R) have front ends connected via respective spherical bearings (74, 74) to left and right top swing arm linking parts disposed on the respective link members (65L, 65R), and the left and right lower arms (62L, 62R) have front ends connected via respective spherical bearings to left and right bottom swing arm linking parts disposed on the respective link members (65L, 65R).

4. The straddle-ridden vehicle of claim 3, wherein
the vehicle body frame (11) comprises left and right lower frames (37L, 37R) each having an L-shape extending from a front surface of the engine (17) along a bottom surface of the engine (17), and a first cross member (41) located forward of the engine (17) and extending between the left and right lower frames (37L, 37R); wherein
the first cross member (41) has one end defining a left upper arm support part (63L) extending leftward from the left lower frame (37L) in a lateral direction of the vehicle (10), the left upper arm support part (63L) being connected to a rear end of the left upper arm (61L); wherein
the first cross member (41) has an opposite end defining a right upper arm support part (63R) extending rightward from the right lower frame (37R) in the lateral direction of the vehicle (10), the right upper arm support part (63R) being connected to a rear end of the right upper arm (61R); wherein
the first cross member (41) has an engine mount part (76) supporting the engine (17); wherein the left lower frame (37L) includes a bent part having a left lower arm support part connected to a rear end of the left lower arm (62L); and wherein
the right lower frame (37R) includes a bent part having a right lower arm support part connected to a rear end of the right lower arm (62R).

5. The straddle-ridden vehicle of claim 4, wherein
the left and right lower frames (37L, 37R) have top parts extending to above a crank case of the engine (17).

6. The straddle-ridden vehicle of claim 3, further comprising:
a swing arm cross member (69) located behind the left and right swing arm linking parts (67L, 67R) and extending between front parts of the left and right upper arms (61L, 61R); and
left and right cushion units (71 L, 71 R) disposed behind the swing arm cross member (69).

7. The straddle-ridden vehicle of claim 3, wherein
the left swing arm (5 1 L) has a V-shape with a rear end of the left lower arm (62L) connected to a rear end of the left upper arm (62L), and wherein
the right swing arm (51 R) has a V-shape with a rear end of the right lower arm (62R) connected to a rear end of the right upper arm (62R).

8. The straddle-ridden vehicle of claim 1, wherein
the vehicle body frame (11) comprises a steering shaft (54) connected to a steering handle (55), the steering shaft (54) being supported in such a manner as to turn leftward and rightward, and a linking mechanism (53) interconnecting the steering shaft (54) and the front fork (52) to allow the front wheel (84) to be turned leftward and rightward.

9. The straddle-ridden vehicle of claim 8, wherein
the linking mechanism (53) comprises a bending mechanism (165) or telescopic mechanism for allowing the steering shaft (54) and the front fork (52) to move vertically relative to each other.

## Patentansprüche

1. Grätschsitzfahrzeug (10), das eine Vorderradaufhängung (15) hat, die aufweist:
einen linken und einen rechten Schwenkarm (51L, 51R), die sich entweder von einem Motor (17) des Fahrzeugs (10) oder von einem Fahrzeugrahmen (11) des Fahrzeugs (10) nach vorne erstrecken, wobei die Schwenkarme (51L, 51R) hintere Enden haben, die vertikal drehbar durch entweder den Motor (17) oder den Fahrzeugrahmen (11) gestützt werden; und
ein linkes und ein rechtes Verbindungselement (65L, 65R); und
eine Vordergabel (52), die ein Vorderrad (13) stützt und durch voneinander entfernte Enden des linken und rechten Verbindungselements (65L, 65R) in einer solchen Weise getragen wird, um nach links oder nach rechts gedreht zu werden,
**dadurch gekennzeichnet, dass**
das linke und rechte Verbindungselement (65L, 65R) sich schräg nach vorne von den vorderen Enden des linken und rechten Schwenkarms (51L, 51R) auf eine Mitte des Fahrzeugs (10) in seitlicher Richtung erstrecken und die linken und rechten Verbindungselemente (65L, 65R) in einer solchen Weise aufgehängt sind, dass sie sich nach links und nach rechts an den entfernten Enden der Schwenkarme (5 1 L, 51R) drehen.

2. Grätschsitzfahrzeug nach Anspruch 1, wobei
das linke Verbindungselement (65L) ein Linker-Schwenkarm-Verbindungsteil (67L), das mit dem vorderen Ende des linken Schwenkarms (51L) verbunden ist, ein Linker-Arm-Teil (81L), das sich von dem Linker-Schwenkarm-Verbindungsteil (67L) nach vorne erstreckt, und ein linkes Steuerrohr (82L) aufweist, das an einem entfernten Ende des Linker-Arm-Teils (81L) angeordnet ist; wobei
das rechte Verbindungselement (65R) ein Rechter-Schwenkarm-Verbindungteil (67R), das mit dem vorderen Ende des rechten Schwenkarms (51R) verbunden ist, ein Rechter-Arm-Teil (81R), das sich nach vorne von dem Rechter-Schwenkarm-Verbindungsteil (67R) erstreckt, und ein rechtes Steuerrohr (82R) hat, das an einem entfernten Ende des Rechter-Arm-Teils (81R) angeordnet ist; und wobei die Vordergabel (52) umfasst:
eine Linkes-Rohr-Stützungswelle (85L), die drehbar in das linke Steuerrohr (82L) eingesetzt ist;
einen linken unteren Träger (86L), der sich nach vorne von einem unteren Ende der Linkes-Rohr-Trägerwelle (85L) erstreckt und mit diesem verbunden ist, wobei der linke untere Träger (86L) ein Ende einer Achse (84) des Vorderrads (13) trägt;
ein linkes Gabelrohr (87L), das sich nach oben von dem linken unteren Träger (86L) erstreckt;
eine Rechtes-Rohr-Trägerwelle (85R), die drehbar in das rechte Steuerrohr (82R) eingesetzt ist;
einen rechten unteren Träger (86R), der sich nach vorne von einem unteren Ende der Rechtes-Rohr-Verbindungswelle (85R) und mit dieser verbunden ist, wobei der rechte untere Träger (86R) eine entgegengesetzte Seite der Achse (84) des Vorderrads (13) trägt;
ein rechtes Gabelrohr (87R), das sich nach oben von dem rechten unteren Träger (86R) erstreckt; und
einen oberen Träger (88), der ein oberes Ende des rechten Gabelrohrs (87) und ein oberes Ende des linken Gabelrohrs (87L) miteinander verbindet und ein oberes Ende der Linkes-Rohr-Trägerwelle (85L) und ein oberes Ende der Rechtes-Rohr-Verbindungswelle (85R) miteinander verbindet.

3. Grätschsitzfahrzeug nach Anspruch 2, wobei
der linke Schwenkarm (51L) einen linken oberen Lenker (61L), der sich entweder von dem Motor (17) oder dem Fahrzeugrahmen (11) nach vorne erstreckt, und einen linken unteren Lenker (62L) umfasst, der unterhalb des linken oberen Lenkers (61L) angeordnet ist und sich entweder von dem Motor (17) oder dem Fahrzeugrahmen (11) nach vorne erstreckt, wobei
der rechte Schwenkarm (51 R) einen rechten oberen Lenker (6 1 R), der sich entweder von dem Motor (17) oder dem Fahrzeugrahmen (11) nach vorne erstreckt und einen rechter unterer Lenker (62R) umfasst, der unterhalb des rechten oberen Lenkers (61R) angeordnet ist und sich entweder von dem Motor (17) oder dem Fahrzeugrahmen (11) nach vorne erstreckt; und wobei
der linke und der rechte obere Lenker (61L, 61R) vordere Enden haben, die jeweils über entsprechende sphärische Lager (74, 74) mit dem linken und rechten oberen Schwenkarmverbindungsteilen verbunden sind, die auf den jeweiligen Verbindungselementen (65L, 65R) angeordnet sind, und die linken und rechten unteren Lenker (62L, 62R) vordere Enden haben, die über jeweils entsprechende sphärische Lager mit dem linken und dem rechten unteren Schwenkarmverbindungsteilen verbunden sind, die an dem jeweiligen Verbindungselement (65L, 65R) angeordnet sind.

4. Grätschsitzfahrzeug nach Anspruch 3, wobei
der Fahrzeugrahmen (11) einen linken und einen rechten unteren Rahmen (37L, 37R) aufweist, die jeweils eine L-Form haben, die sich von einer vorderen Fläche des Motors (17) entlang einer unteren Fläche des Motors (17) erstreckt und ein Querelement (41), das vorderhalb des Motors (17) angeordnet ist und sich zwischen dem linken und dem rechten unteren Rahmen (37L, 37R) erstreckt;
wobei
das erste Querelement (41) ein Ende hat, das ein Linkes-Oberer-Lenker-Stützteil (63L) bildet und sich links von dem linken unteren Rahmen (37L) in einer seitlichen Richtung des Fahrzeugs (10) erstreckt,
das Linker-Ober-Lenker-Stützteil (63L) mit einem hinteren Ende des linken oberen Lenkers (61L) verbunden ist; wobei
das erste Querelement (41) ein abgewandtes Ende hat, das ein Rechter-Oberer-Lenker-Stützteil (63R) bildet, das sich rechts von dem rechten unteren Rahmen (37R) in der seitlichen Richtung des Fahrzeugs (10) erstreckt, wobei das Rechter-Oberer-Lenker-Stützteil (63R) mit einem hinteren Ende des rechten oberen Lenkers (61R) verbunden ist, wobei
das erste Querelement (41) einen Motormontageabschnitt (76) hat, der den Motor (17) trägt; wobei der linke untere Rahmen (37L) einen gebogenen Teil umfasst, der ein Linker-Unterer-Lenker-Stützteil umfasst, das mit einem hinteren Ende des linken unteren Lenkers (62L) verbunden ist; und wobei
der rechte untere Rahmen (37R) einen gebogenen Teil aufweist, der ein Rechter-Unterer-Arm-Stützteil hat, das mit einem hinteren Ende des rechten unteren Lenkers (62R) verbunden ist.

5. Grätschsitzfahrzeug nach Anspruch 4, wobei
der linke und der rechte untere Rahmen (37L, 37R) obere Teile haben, die sich oberhalb des Kurbelgehäuses des Motors (17) erstrecken.

6. Grätschsitzfahrzeug nach Anspruch 3, weiterhin aufweisend:
ein Schwenkarm-Querelement (69), das hinter dem linken und rechten Schwenkarmverbindungsteil (67L, 67R) angeordnet ist und das sich zwischen den vorderen Teilen des linken und rechten oberen Lenkers (61L, 61 R) erstreckt;
und
linke und rechte Dämpfereinheiten (71L, 71R), die hinter dem Schwenkarm-Querelement (69) angeordnet sind.

7. Grätschsitzfahrzeug nach Anspruch 3, wobei
der linke Schwenkarm (51L) eine V-Form mit einem hinteren Ende des linken unteren Lenkers (62L) verbunden ist, mit einem hinteren Ende des linken oberen Lenkers (62L), und wobei
der rechte Schwenkarm (51R) eine V-Form hat, wobei das hintere Ende des rechten unteren Lenkers (62R) mit einem hinteren Ende des rechten oberen Lenkers (62R) verbunden ist.

8. Grätschsitzfahrzeug nach Anspruch 1, wobei
der Fahrzeugrahmen (11) eine Steuerwelle (54) aufweist, die mit einem Lenker (55) verbunden ist,
wobei die Steuerwelle (54) in einer Art und Weise gelagert ist, so dass sie linkswärts und rechtswärts zu drehen ist, und einen Verbindungsmechanismus (53), der die Steuerwelle (54) und die Vordergabel (52) miteinander verbindet, um zu ermöglichen, dass das Vorderrad (84) linkswärts oder rechtswärts gedreht wird.

9. Grätschsitzfahrzeug nach Anspruch 8, wobei
der Verbindungsmechanismus (53) einen Biegemechanismus (165) oder einen Teleskopmechanismus aufweist um zu ermöglichen, dass die Steuerwelle (54) und die Vordergabel (52) vertikal relativ zueinander bewegt werden.

## Revendications

1. Véhicule à enfourcher (10) ayant un système de suspension de roue avant (15) comprenant :
des bras oscillants gauche et droit (51L, 51R) s'étendant vers l'avant depuis l'un d'un moteur (17) du véhicule (10) et d'une ossature de cadre de véhicule (11) du véhicule (10), les bras oscillants (51L, 51R) ayant des extrémités arrière supportées verticalement de façon pivotante par l'un du moteur (17) et de l'ossature de cadre de véhicule (11) ;
des organes de liaison gauche et droit (65L, 65R) ; et
une fourche avant (52) supportant une roue avant (13) et supportée par des extrémités distales des organes de liaison gauche et droit (65L, 65R) de façon à tourner vers la gauche et vers la droite,
**caractérisé en ce que**
lesdits organes de liaison gauche et droit (65L, 65R) s'étendent obliquement vers l'avant depuis les extrémités avant des bras oscillants gauche et droit (51L, 51R) vers un centre latéral du véhicule (10) et les organes de liaison gauche et droit (65L, 65R) sont supportés de façon à pivoter vers la gauche et vers la droite sur les extrémités distales des bras oscillants (51L, 51R).

2. Véhicule à enfourcher selon la revendication 1, dans lequel
l'organe de liaison gauche (65L) comprend une partie d'articulation de bras oscillant gauche (67L) raccordée à l'extrémité avant du bras oscillant gauche (51L), une partie de bras gauche (81L) s'étendant vers l'avant depuis la partie de liaison de bras oscillant gauche (67L), et un tube de direction gauche (82L) disposé sur une extrémité distale de la partie de bras gauche (81L) ; dans lequel
l'organe de liaison droit (65R) a une partie de liaison de bras oscillant droit (67R) raccordée à l'extrémité avant du bras oscillant droit (51R), une partie de bras droit (81R) s'étendant vers l'avant depuis la partie de liaison de bras oscillant droit (67R), et un tube de direction droit (82R) disposé à une extrémité distale de la partie de bras droit (81R) ; et dans lequel la fourche avant (52) inclut :
un arbre de support de tube gauche (85L) inséré avec faculté de rotation dans le tube de direction gauche (82L) ;
un bras de support inférieur gauche (86L) s'étendant vers l'avant depuis et raccordé à une extrémité inférieure de l'arbre de support de tube gauche (85L), le bras de support inférieur gauche (86L) supportant une extrémité d'un essieu (84) de la roue avant (13) ;
un tube de fourche gauche (87L) s'étendant vers le haut depuis le bras de support inférieur gauche (86L) ;
un arbre de support de tube droit (85R) inséré avec faculté de rotation dans le tube de direction droite (82R) ;
un bras de support inférieur droit (86R) s'étendant vers l'avant depuis et raccordé à une extrémité inférieure de l'arbre de support de tube droit (85R), le bras de support inférieur droit (86R) supportant une extrémité opposée de l'essieu (84) de la roue avant (13) ;
un tube de fourche droite (87R) s'étendant vers le haut depuis le bras de support inférieur droit (86R) ; et
un bras de support supérieur (88) réalisant une interconnexion entre une extrémité supérieure du tube de fourche droite (87R) et une extrémité supérieure du tube de fourche gauche (87L), et réalisant une interconnexion entre une extrémité supérieure de l'arbre de support de tube gauche (85L) et une extrémité supérieure de l'arbre de support de tube droit (85R).

3. Véhicule à enfourcher selon la revendication 2, dans lequel
le bras oscillant gauche (51L) comprend un bras supérieur gauche (61L) s'étendant vers l'avant depuis l'un du moteur (17) et de l'ossature de cadre de véhicule (11), et un bras inférieur gauche (62L) disposé sous le bras supérieur gauche (61L) et s'étendant vers l'avant depuis l'un du moteur (17) et de l'ossature de cadre de véhicule (11) ; dans lequel
le bras oscillant droit (51R) comprend un bras supérieur droit (61R) s'étendant vers l'avant depuis l'un du moteur (17) et de l'ossature de cadre de véhicule (11), et un bras inférieur droit (62R) disposé sous le bras supérieur droit (61R) et s'étendant vers l'avant depuis l'un du moteur (17) et de l'ossature de cadre de véhicule (11) ; et dans lequel
les bras supérieurs gauche et droit (61L, 61R) ont des extrémités avant raccordées via des paliers sphériques (74, 74) respectifs à des pièces d'articulation de bras oscillants supérieurs gauche et droit disposés sur les organes de liaison (65L, 65R) respectifs, et les bras inférieurs gauche et droit (62L, 62R) ont des extrémités avant raccordées via des paliers sphériques respectifs à des pièces d'articulation de bras oscillant inférieurs gauche et droit disposées sur les organes de liaison (65L, 65R) respectifs.

4. Véhicule à enfourcher selon la revendication 3, dans lequel
l'ossature de cadre de véhicule (11) comprend des ossatures inférieures gauche et droite (37L, 37R) chacune ayant une forme en L s'étendant depuis une surface avant du moteur (17) le long d'une surface inférieure du moteur (17) et une première traverse (41) située à l'avant du moteur (17) et s'étendant entre les ossatures inférieures gauche et droite (37L, 37R) ; dans lequel
la première traverse (41) comprend une extrémité définissant une pièce de support de bras supérieur gauche (63L) s'étendant vers la gauche depuis l'ossature inférieure gauche (37L) dans une direction latérale du véhicule (10), la pièce de support de bras supérieur gauche (63L) étant raccordée à une extrémité arrière du bras supérieur gauche (61L) ; dans lequel
la première traverse (41) a une extrémité opposée définissant une pièce de support de bras supérieur droite (63R) s'étendant vers la droite depuis l'ossature inférieure droite (37R) dans la direction latérale du véhicule (10), la pièce de support de bras supérieur droit (63R) étant raccordée à une extrémité arrière du bras supérieur droit (61R) ; dans lequel
la première traverse (41) a une pièce de montage de moteur (76) supportant le moteur (17) ; dans lequel l'ossature inférieure gauche (37L) inclut une pièce courbée ayant une pièce de support de bras inférieur gauche raccordée à une extrémité arrière du bras inférieur gauche (62L) ; et dans lequel
l'ossature inférieure droite (37R) inclut une pièce courbée comprenant une pièce de support de bras inférieur droit raccordée à une extrémité arrière du bras inférieur droit (62R).

5. Véhicule à enfourcher selon la revendication 4, dans lequel
les ossatures inférieures gauche et droite (37L, 37R) ont des pièces supérieurs s'étendant jusqu'au dessus d'un carter de vilebrequin du moteur (17).

6. Véhicule à enfourcher selon la revendication 3, comprenant en outre :
une traverse de bras oscillant (69) située derrière les pièces d'articulation de bras oscillants gauche et droit (67L, 67R) et s'étendant entre des pièces avant des bras supérieurs gauche et droit (61L, 61R) ;
et
des unités de suspension gauche et droite (71L, 71R) disposées derrière la traverse de bras oscillant (69).

7. Véhicule à conduite à califourchon selon la revendication 3, dans lequel
le bras oscillant gauche (51L) a une forme en V avec une extrémité arrière du bras inférieur gauche (62L) raccordée à une extrémité arrière du bras supérieur gauche (62L), et dans lequel
le bras oscillant droit (51R) a une forme en V avec une extrémité arrière du bras inférieur droit (62R) raccordée à une extrémité arrière du bras supérieur droit (62R).

8. Véhicule à enfourcher selon la revendication 1, dans lequel
l'ossature de cadre de véhicule (11) comprend un arbre de direction (54) raccordé à un guidon (55),
l'arbre de direction (54) étant supporté de façon à tourner vers la gauche et vers la droite, et un mécanisme d'articulation (53) réalisant une interconnexion entre l'arbre de direction (54) et la fourche avant (52) pour permettre à la roue avant (84) de tourner vers la gauche et vers la droite.

9. Véhicule à enfourcher selon la revendication 8, dans lequel
le mécanisme d'articulation (53) comprend un mécanisme de flexion (165) ou un mécanisme télescopique pour permettre à l'arbre de direction (54) et à la fourche avant (52) de se déplacer verticalement l'un par rapport à l'autre.
